(19) Europäisches Patentamt
European Patent Office
Office européen des brevets

(11) Publication number: **0 681 995 A2**

# (12) EUROPEAN PATENT APPLICATION

(21) Application number: **95201229.2**

(51) Int. Cl.$^{6}$: **C02F 5/14**

(22) Date of filing: **11.05.95**

(30) Priority: **12.05.94 GB 9409483**

(43) Date of publication of application:
**15.11.95 Bulletin 95/46**

(84) Designated Contracting States:
**AT BE CH DE DK ES FR GB GR IE IT LI LU MC NL PT SE**

(71) Applicant: **FMC CORPORATION (UK) LIMITED**
**Tenax Road,**
**Trafford Park**
**Manchester M17 1WT (GB)**

(72) Inventor: **Patel, Suresh**
**37 Lawnswood Park Road**
**Swanton,**
**Manchester M27 5NJ (GB)**
Inventor: **Milligan, John Robert**
**60 Westbourne Road**
**Urmston,**
**Manchester M41 0XO (GB)**
Inventor: **Clark, David Ronald**
**16 Ennerdale Drive,**
**Ashton on Mersey**
**Sale,**
**Cheshire M33 5NE (GB)**

(74) Representative: **Hamilton, Raymond**
**FMC Corporation (UK) Limited**
**Process Additives Division**
**Tenax Road**
**Trafford Park**
**Manchester M17 1WT (GB)**

## (54) Scale inhibition process.

(57) A method for inhibiting the formation of scale formed primarily from amorphous silica in an aqueous system comprises the addition of a phosphinopolycarboxylic acid inhibitor. The inhibitors may be homopolymeric or copolymeric or a mixture of the two. The preferred inhibitors include phosphinopoly(meth) acrylic acids and their salts and phosphino acrylic/2-acrylamido-2-methyl propane sulphonic acid copolymers.

EP 0 681 995 A2

This invention relates to a novel method for inhibiting the deposition of silica scale in aqueous systems and on the surfaces which contain those systems and to novel compositions useful in those methods. The invention finds particular application in the treatment of aqueous systems utilised in the geothermal power industry where the formation of scale which is comprised wholly or predominantly of silica is a particular problem.

Salt precipitation and scale deposition is a problem in the maintenance of aqueous systems. Scale deposits can obstruct fluid flows and impede heat transfer. The deposits can cause wear and corrosive attack on the surface of the containers which hold the systems. The formation of scale poses a significant problem in a wide variety of industries and under a variety of conditions.

Probably the most commonly encountered forms of scale are the insoluble salts of divalent metals such as calcium, magnesium, strontium and barium with cations such as sulphate, carbonate, hydroxide, phosphate and silicate. A wide variety of materials have been used to inhibit the formation of scale formed from these materials largely by maintaining these ionic species in solution.

The formation of scale from aqueous systems which contain relatively high proportions of silicon containing species presents a particular difficulty. The scale deposited from these systems may comprise silicate salts or amorphous silica or a combination of the two depending upon the nature of the aqueous system. The formation of such scales is becoming a more serious problem and a variety of methods of alleviating it have been proposed. One recent example is USP 5256302 which describes a process for inhibiting the deposition of silica and silicate deposits using a combination of a phosphino polycarboxylic acid and a copolymer of acrylic acid and an allyl hydroxypropyl sulphonate ether. The comparative examples presented as part of this patent show that phosphino polycarboxylic and phosphino polycarboxylic/ sulphonic acids are not effective inhibitors for the scales produced under the alkaline conditions (pH 8.5) of those examples.

This invention relates to a process for the inhibition of scales which consist wholly or at least predominantly of silica. We have discovered that the phosphinopolycarboxylic acids are surprisingly effective in inhibiting the formation of scale which consists wholly or predominantly of silica. Such scales are formed in more acidic media, generally those having a pH of less than 8.0.

The phosphinopolycarboxylic acids useful in the processes of this invention may be homopolymeric or copolymeric ie, they may be homopolymeric telomers derived by the polymerisation of one or more unsaturated carboxylic acids in the presence of a hypophosphite telogen or they may be copolymeric telomers derived by the polymerisation of at least one unsaturated carboxylic acid with at least one other olefinically unsaturated monomer in the presence of a hypophosphite telogen. Such phosphinopolycarboxylic acids are well known in the art having been described for example in GB Patent 1458235 and US Patent 4681686.

Accordingly from one aspect this invention provides a method for treating an aqueous system in order to inhibit the formation of a scale which consists wholly or predominantly of silica which comprises adding to that system an effective quantity of a water soluble polymer having the general formula I

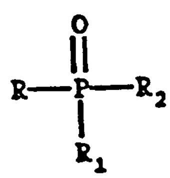

I

wherein R represents a polymeric residue comprising at least one unit of formula II

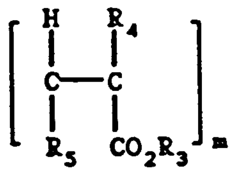

*II*

wherein $R_3$ represents a hydrogen atom, an alkyl group having from 1 to 4 carbon atoms or a phenyl group.

$R_4$ represents a hydrogen atom, a methyl group or a group $-CO_2R_6$ wherein $R_6$ represents an alkyl group comprising from 1 to 4 carbon atoms.

$R_5$ represents a hydrogen atom, an alkyl group comprising 1 to 4 carbon atoms optionally substituted by a hydroxyl group, a group $-CO_2R_7$ wherein $R_7$ represents a hydrogen atom or an alkyl group comprising from 1 to 4 carbon atoms and m is an integer having a value of from 1 to 100.
and optionally at least one unit of the general formula III different from the unit of formula II

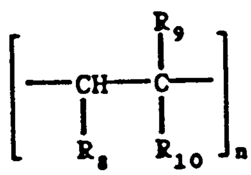

*III*

wherein $R_8$ represents a hydrogen atom, a methyl group or a group $-CO_2R_{11}$ wherein $R_{11}$ represents a hydrogen atom or an alkyl group comprising from 1 to 8 carbon atoms; $R_9$ represents a hydrogen atom, a alkyl group comprising from 1 to 4 carbon atoms, a hydroxymethyl group or a group $-CO_2R_{11}$.

$R_{10}$ is a residue $-CO_2R_7$ (wherein $R_7$ has its previous significance), a straight or branched alkyl residue having 1 to 8 carbon atoms optionally substituted by one to three carboxylic acid groups, a phenyl residue, an acetoxy residue, hydroxymethyl, an acetoxymethyl residue, $-SO_3M$, $-CH_2SO_3M$ or $-PO_3M_2$ or $PO_3M'_2$ (in which M is hydrogen or an alkali metal or alkaline earth metal atom and M' is M or $C_1$-$C_4$ alkyl), a residue $-CONR_2R_{13}$ (wherein $R_2$ and $R_{13}$ are the same or different and each is hydrogen, a straight or branched chain alkyl residue having 1 to 8 carbon atoms, hydroxymethyl or a residue $-CH(OH)-CO_2M$, $-C(CH_3)_2CH_2SO_3M$ or $-C(CH_3)_2CH_2PO_3M_2$, (wherein M has its previous significance) or $-N(R_{14})COCH_3$, in which $R_{14}$ is hydrogen or $C_1$-$C_4$ straight or branched chain alkyl and n is an integer having a value of from 1 to 100.

n and m are integers, the sum of n + m is an integer having a value of from 3 to 100; the ratio of n:m (where n is present) is in the range 99:1 to 1:99 .

$R_1$ represents a residue -OX wherein X represents a hydrogen atom, an alkali metal or alkaline earth metal cation, an ammonium ion or an amine residue.

$R_2$ represents a group R, or a hydrogen atom, the value of m and n in a group R may be the same or different from the values of m and n in a group $R_2$.

Preferably $R_{10}$ represents a sulphonate containing group and is a group - $(CH_2)_xSO_3M$ wherein M represents a hydrogen atom or an alkali metal or an alkaline earth metal, x is 0 or is an integer having a value of from 1 to 4; a group having the formula $-CONHC(CX_2)_yCH_2SO_3M$ wherein y is an integer having a value of from 1 to 4 and X represents a hydrogen atom or a methyl group; a phenyl sulphonic acid group $C_6H_4SO_3M$ or a group having the formula $-CH_2O-[CY_2]_zSO_3M$ wherein Y represents a hydrogen atom, a hydroxyl group or a methyl group, z is an integer having a value of from 1 to 4 and M represents a hydrogen atom or an alkali metal or an alkaline earth metal;

The water soluble polymers which have been discovered to be useful in the processes of the present invention are known compounds which can be prepared by methods known in the art.

They may conveniently be produced by the reaction of m moles of an acid having the formula IV (wherein $R_3$ preferably represents a hydrogen atom)

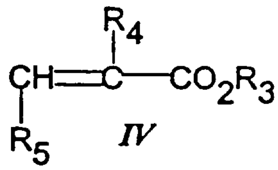

IV

optionally with n moles of a compound having the formula V

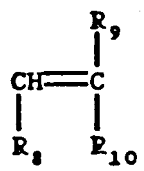

V

wherein $R_3$, $R_4$, $R_5$, $R_8$, $R_9$ and $R_{10}$, n and m have their previous significance
with one molar proportion of hypophosphorous acid or a hypophosphite.

The production of copolymeric water soluble compounds having the formula I (ie, those polymers comprising a unit of formula II and a unit of formula III) wherein $R_2$ represents a residue R or a hydrogen atom has been described in USP 4681686. The reaction may be carried out in a solvent inert under the reaction conditions and in the presence of a suitable initiator. Suitable solvents include water aqueous ethanol or dioxan. Suitable initiators include those compounds which decompose under the conditions of the reaction to yield free radicals. Examples of suitable initiators include bisazoisobutyronitrile, organic peroxides such as benzoyl peroxide, methyl ethyl ketone peroxide, ditertiary butyl peroxide, monobutyl hydroperoxide, hydrogen peroxide, sodium perborate, sodium persulphate, potassium persulphate and ammonium persulphate.

The production of homopolymeric compounds having the formula I (ie, those polymers containing a unit of formula II but no unit of formula III) has been described in GB 1458235 and is broadly similar. The processes of USP 4681686 may be employed using only one saturated monomer.

The products of these various preparative processes may be obtained as aqueous solutions. These solutions may be used in the processes of this invention as such or they may be subject to a purification procedure prior to being used. Examples of suitable purification procedures include (i) evaporation of the product solution, dissolution of the residue in water, washing with a water miscible organic solvent such as ether and evaporation of the aqueous solution; (ii) evaporation of the reaction solvent, dissolution of the residue in a suitable solvent such as methanol and reprecipitation by addition of a non-solvent such as ether.

The salts of the compounds of formula I in which some or all of the acidic hydrogens in the compounds of formula I have been replaced by cations derived from salt forming bases of alkali metal or alkaline earth metals may be prepared by mixing an aqueous or alcoholic solution of the compound of formula I with an aqueous or alcoholic solution containing an amount of the requisite base in excess of, equal to or less than the stoichiometric requirement. The solvent may then be removed by evaporation. In many of the water containing systems to which the processes of this invention may usefully be applied the water is sufficiently alkaline to effect neutralisation and the acidic product produced by the processes of this invention may be used directly.

The examples of compounds having the formula IV which used to produce polymers which are useful according to this invention include acrylic acid and methacrylic acid, 1 carboxymethyl acrylic acid, 2 hydroxyethyl methacrylate, 2 hydroxypropyl methacrylate, 2 hydroxyethyl acrylate, 2 hydroxypropyl acrylate, 2 carboxyethyl acrylate, maleic acid, maleic anhydride and $C_1$ to $C_4$ alkyl or phenyl esters of these acids and their alkali metal, alkaline earth metal, ammonium or amine salts. The preferred compounds of formula IV are acrylic acid and methacrylic acid. Examples of compounds of formula V which may be reacted with these acids include vinylsulphonic acid, allyl sulphonic acid, 4-styrenesulphonic acid, sodium or potassium salts of 3 sulphopropylacrylic acid, 2 acrylamido-2-methyl propane sulphonic acid, N-acrylamidopropanesulphonic acid and allyl hydroxypropyl sulphonate ether. The preferred compounds of

formula V which are used on the production of polymers useful according to this invention are 2-acrylamido-2-methyl propanesulphonic acid, allyl hydroxypropyl sulphonate ether and 4-styrenesulphonic acid.

The polymeric species useful in the processes of this invention are those which are water soluble at least in sufficient quantity to inhibit the formation of silica scale.

In general the polymers will comprise from 3 to 40 repeat units, ie, the value of the sum of m and n in the formula I will be from 3 to 40. The copolymeric species may contain a widely varying proportion of the two monomers having the general formulae IV and V ie, the ratio of the values of n and m may vary through a wide range. In general copolymers having the general formula I wherein the ratio of the integers m and n is from 20:1 to 1:20 more usually 10:1 to 1:10 are preferred for use in the processes of this invention.

The processes of this invention may be used to inhibit the formation of scale which consists of or is predominantly formed from silica. The scale may comprise a mixture of silica and silicate salts in which silica comprises at least 50% by weight of the scale more usually at least 75% by weight of the scale and most commonly more than 90% by weight of the scale. In the preferred embodiments these scales will comprise only a minor proportion of silicate usually less than 5% and more usually less than 2% by weight of silicate. Most preferably the scale inhibited will be one which is free from silicate. Such scales may be encountered in a wide variety of industries. One industry in which the formation of silica scale is known to be a particular problem is the geothermal energy industry. The geothermal wells generate a mixture of liquid and vapour which is passed to a separator where it is separated into a vapour stream and a liquid stream. The problem of scale formation is encountered in the liquid stream which may contain relatively high concentrations of dissolved solids. Heat energy is extracted from this stream and subsequently it is normally reinjected into the well. This stream will generally have a pH in the range 6.5 to 7.5 and any silicon containing scale will tend to consist essentially of amorphous silica. The problem of scale formation may be more frequently encountered as the stream is cooled and can cause severe problems if the reinjection systems become blocked. These problems of scale formation may be alleviated by the methods of this invention. The polymeric species may be added at any time to the liquid stream at any convenient point in the system. The quantity of polymer which is added will generally be in the range 1 to 100 ppm. The actual quantity employed will be selected by the user to give the degree of scale control which is desired.

The problem of silica scale formation are also encountered in a wide variety of other industries. In particular silica scale may be formed in boiler waters where soluble silica slippage has occurred. As the concentration of the dissolved solids in the boiler increases, this could lead to silica scale formation. This reduces the efficiency of the boiler and can lead to blockages. Silica scale formation can be encountered in membrane systems especially in reverse osmosis systems where the feed water contains soluble silica. Silica scale deposition can also be encountered in cooling water systems. Such waters will normally be maintained at a pH value in the range 7.0 to 8.0 and typically will have a pH of around 7.5. This often limits the efficient and economical operation of the cooling water system at higher cycles of concentration. Other industrial systems where silica scale may be found are in the mining industry, the papers industry and sugar evaporators.

The application of the method of this invention to aqueous systems of these type can reduce silica scale and permit the efficient operation of the system.

The polymeric compounds of formula I (or a mixture of such compounds) are effective inhibitors for silica scale when used in isolation. They can also be used in combination with other known scale inhibitors and water treatment chemicals. We have discovered that methods for treating an aqueous system to inhibit silica scale which comprise adding to that system a mixture of homopolymeric compounds and copolymeric compounds having the formula I may be particularly effective and such methods constitute a preferred aspect of this invention.

A particularly preferred process of the present invention utilises a mixture of a homopolymeric phosphinopoly(meth) acrylic acid having the formula VI

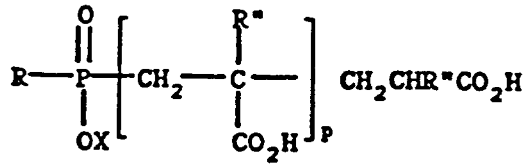

*VI*

wherein X represents a hydrogen atom or an alkali metal cation, R" represents a hydrogen atom or a methyl group. R represents a hydrogen atom or a group

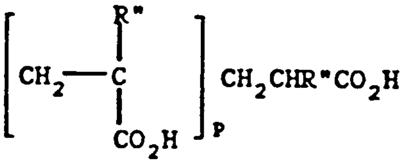

and p is an integer,

with a copolymeric phosphinopolycarboxylic acid having the formula I wherein in the unit of formula III $R_{10}$ represents a group $(CH_2)_xSO_3M$ wherein M represents a hydrogen atom or an alkali metal or an alkaline earth metal, x is 0 or an integer having a value of from 1 to 4, a group having the formula $-CONHC(CX_z)-{}_yCH_2SO_3M$ wherein y is an integer having a value of from 1 to 4 and X represents a hydrogen atom or a methyl group, a phenyl sulphonic acid group $C_6H_4SO_3M$ or a group having the formula $CH_2-O\ (CY_2)_ZSO_3M$ wherein Y represents a hydrogen atom a hydroxyl group or a methyl group and Z is an integer having a value of from 1 to 4.

The use of such mixtures represents an especially preferred aspect of the present invention. The two polymers used in such processes may be added separately to the aqueous system but more usually they will be combined into a single formulated additive. Such formulations are believed to be novel and constitute a further aspect of this invention.

These mixtures may contain the two ingredients combined in a range of proportions. In general they will be used in proportions of 20:80 to 80:20 parts by weight. The use of substantially equal amounts of the two polymers is generally preferred.

Various other known threshold agents may also be employed in this aspect of the invention. For example hydrolysed polyacrylonitrile, polymerised acrylic acid, polymerised methacrylic acid, polyacrylamide and copolymers thereof with acrylic and methacrylic acid, lignin sulphonic acid and its salts, tannin, napthalene sulphonic acid/formaldehyde condensation products, starch and its derivatives, cellulose, acrylic acid/lower alkyl hydroxyacrylate copolymers eg those described in USP 4029577, styrene/maleic anhydride copolymers, sulphonated styrene homopolymers eg those described in USP 4374733 and combinations thereof may all be used in the processes of this invention. Specific threshold agents which may be used include 2 phosphonobutane 1,2,4 tri-carboxylic acid, hydroxyethyldiphosphonic acid, hydrolysed polymaleic acid and its salts, alkylphosphonic acids, hydroxy phosphonoacetic acid, aminoalkyl-1,1-diphosphonic acids and their salts and alkali metal polyphosphates.

The compounds of formula I may also be mixed with a variety of other components to produce a formulation which may be used in the methods of this invention. Such formulations may incorporate corrosion inhibitors for example water soluble zinc salts, phosphates, polyphosphates, phosphonic acids, nitrilotrismethylenephosphonic acid, methylaminodimethylenephosphonocarboxylic acids, hydroxyphosphonoacetic acid, nitrates, nitrites, molybdates, tungstates, silicates, benzotriazole, methylene-bisbenzotriazole, mercaptobenzthiazole, N-acyl sarcosines, N-acyliminodiacetic acids, ethanolamines and fatty amines; precipitating agents such as orthophosphates and carbonates, oxygen scavengers such as alkali metal sulphites and hydrazines, sequestering agents such as nitrilotriacetic acid, antifoaming agents such as silicones eg polydimethylsiloxanes and biocides such as amines quaternary ammonium compounds, chlorophenols, sulphones, methylene bisthiocyanates and carbonates, isothiazolones, brominated propionamides, triazines, phosphonium compounds, chlorine and chlorine releasing agents, bromine and bromine releasing agents and organometallic compounds such as tributyl tin oxide.

The invention is illustrated by the following example:

Example 1

The efficacy of various additives in solubilising silica was evaluated using the following test.

A basic water was made up containing 1000 ppm $SiO_2$ (as silica gel) 10 pp $Ca^{2+}$ and 10 ppm $Mg^{2+}$. Sufficient additive was added to provide a concentration of 10 ppm and the pH adjusted to 6.0 by the addition of acid. The solution was stirred at room temperature for 10 to 14 days until the concentration of silica in the solution was constant. The silica concentration was measured using an Avro Analyser from Technicon Instruments Corp (automated method for molybdate reactive silica).

The results for each inhibitor are presented as a percentage increase in silica solubility which is calculated as

$$\frac{SiO_2(I) - SiO_2(B) \times 100}{S_{iO2}(B)}$$

where $SiO_2$(I) is the equilibrium concentration of silica in the presence of the inhibitor. $SiO_2$(B) is the equilibrium concentration of silica in a control test carried out in the absence of an inhibitor. The results are presented as Table I.

Table I

| Additive | % Increase in Solubility |
|---|---|
| A | 55.6 |
| B | 14.2 |
| C | 44.4 |
| D | 17 |
| E | 1.85 |
| F | -9.3 |
| G | -7.41 |

The additives tested were:-

A - a phosphinopolyacrylic acid having Mw 1000
B - a phosphinopolyacrylic acid having Mw 2000
C - a phosphinopolyacrylic acid having Mw 4000
D - a phosphino/acrylic acid/2-acrylamido-2methylpropane sulphonic acid copolymer having Mw ~3500
E - a polymaleic acid
F - 2-phosphonobutane 1,2,4-tricarboxylic acid
G - an acrylic acid/2-acrylamido-2methylpropane sulphonic acid copolymer.

The results show that the phosphino polyacrylic acids A, B, C and D are more effective solubilisers for silica than additives E, F and G which are included as comparative examples.

Example 2

A geothermal brine handling facility was used to evaluate the efficiency of silica scale inhibition of a formulation comprising equal parts by weight of

(a) a phosphino/acrylic acid/2-acrylamido-2-methylpropane sulphonic acid copolymer having a molecular weight of less than 5000.
(b) a phosphino/polyacrylic acid polymer having a molecular weight of less than 3000.

The brine handling line in the facility was divided into two parallel lines. The brine in one line was untreated (the Blank Line). The second line was treated by the introduction of the formulation at its upstream end. Spools were inserted at various points in both lines which could be removed for inspection.

The chemical composition of the water was:

| | |
|---|---|
| Total Silica: | 870 ppm as $SiO_2$ |
| Silica Saturation Index: | 2.2 |
| Calcium Concentration: | 76 ppm as $Ca^{++}$ |
| Chloride Concentration: | 5500 ppm as $Cl^-$ |
| pH: | 7.4 |
| Dose Level of Formulation: | 5 ppm and 10 ppm |

The conditions of operation were:

| | |
|---|---|
| Temperature: | 95 ° C |
| Pressure: | 9 psig |
| Flow Rate: | 2.2 kg/minute |

After four weeks operation the spools were removed. The thickness of the scale deposited on the interior of each was measured. The scale was analysed and found to consist essentially of amorphous silica. The results of the evaluations are represented in Figure 1 (5 ppm dose level) and Figure 2 (10 ppm dose level).

These results show that the additive reduces the thickness of the silica deposit over the entire length of the line by approximately 35% at a 5 ppm dose level and approximately 90% at a 10 ppm dose level.

Example 3

A fouling monitor was used to evaluate the rate of fouling in a tube connected to the brine handling line in the facility described in Example 2. A series of additives were added to the tube at the average dose levels reported below. After a period the tube was removed and the amount of scale measured. The rate of fouling is expressed as milligrams/cm$^2$/year. The results were those presented as Table 2.

Table 2

| Additive | Dose Level ppm solids | Fouling Rate |
|---|---|---|
| None (control) | - | 343 |
| Polymaleic Acid | 59 | 593 |
| Polyacrylic Acid Phosphinopolyacrylic | 50 | 415 |
| acid/2-acrylamido-2 methyl propane sulphonic acid copolymer | 55 | 272 |

**Claims**

**1.** A method for treating an aqueous system in order to inhibit the formation of a scale which consists wholly or predominantly of silica which comprises adding to that system an effective quantity of a water soluble polymer having the general formula I

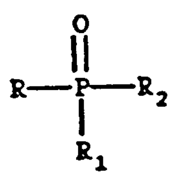

*I*

wherein R represents a polymeric residue comprising at least one unit of formula II

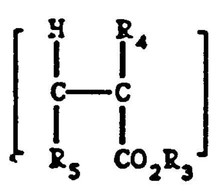

wherein $R_3$ represents a hydrogen atom, an alkyl group having from 1 to 4 carbon atoms or a phenyl group.

$R_4$ represents a hydrogen atom, a methyl group or a group $-CO_2R_6$ wherein $R_6$ represents an alkyl group comprising from 1 to 4 carbon atoms. $R_5$ represents a hydrogen atom, an alkyl group comprising 1 to 4 carbon atoms optionally substituted by a hydroxyl group, a group $-CO_2R_7$ wherein $R_7$ represents a hydrogen atom or an alkyl group comprising from 1 to 4 carbon atoms and m is an integer having a value of from 1 to 100.
and optionally at least one unit of the general formula III different from the unit of formula II

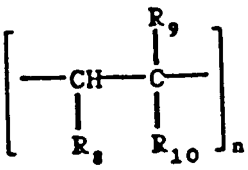

III

wherein $R_8$ represents a hydrogen atom, a methyl group or a group $-CO_2R_{11}$ wherein $R_{11}$ represents a hydrogen atom or an alkyl group comprising from 1 to 8 carbon atoms; $R_9$ represents a hydrogen atom, a alkyl group comprising from 1 to 4 carbon atoms, a hydroxymethyl group or a group $-CO_2R_{11}$.

$R_{10}$ is a residue $-CO_2R_7$ (wherein $R_7$ has its previous significance), a straight or branched alkyl residue having 1 to 8 carbon atoms optionally substituted by one to three carboxylic acid groups, a phenyl residue, an acetoxy residue, hydroxymethyl, an acetoxymethyl residue, $-SO_3M$, $-CH_2SO_3M$ or $-PO_3M_2$ or $PO_3M'_2$ (in which M is hydrogen or an alkali metal or alkaline earth metal atom and M' is M or $C_1$-$C_4$ alkyl), a residue $-CONR_2R_{13}$ (wherein $R_2$ and $R_{13}$ are the same or different and each is hydrogen, a straight or branched chain alkyl residue having 1 to 8 carbon atoms, hydroxymethyl or a residue $-CH(OH)-CO_2M$, $-C(CH_3)_2CH_2SO_3M$ or $-C(CH_3)_2CH_2PO_3M_2$, (wherein M has its previous significance) or $-N(R_{14})COCH_3$, in which $R_{14}$ is hydrogen or $C_1$-$C_4$ straight or branched chain alkyl and n is an integer having a value of from 1 to 100.

2. A method according to claim 1 characterised in that the water soluble polymer has the general formula 1 wherein $R_1$ represents a hydrogen atom.

3. A method according to claim 1 characterised in that $R_1$ represents a residue -OX wherein X represents a hydrogen atom, an alkali metal or alkaline earth metal cation, an ammonium ion or an amine residue.

4. A method according to any of claims 1 to 3 characterised in that the water soluble polymer is a homopolymeric compound containing units of formula II but no units of formula III.

5. A method according to claim 4 characterised in that M has a value of from 3 to 40.

6. A method according to either of claims 4 or 5 characterised in that the water soluble polymer has the formula I wherein $R_3$ represents a hydrogen atom.

7. A method according to claim 6 characterised in that the water soluble polymer has the general formula I wherein $R_4$ represents a hydrogen atom.

8. A method according to either of claims 6 or 7 characterised in that the water soluble polymer has the general formula I wherein $R_5$ represents a hydrogen atom.

9. A method according to any of claims 1 to 3 characterised in that the water soluble polymer is a compolymeric compound containing units of formula II and units of formula III.

10. A method according to claim 9 characterised in that m and n are integers and the sum of m and n is in the range 3 to 40.

11. A method according to either of claims 9 or 10 characterised in that the water soluble polymer has the general formula I wherein $R_8$ represents a hydrogen atom.

12. A method according to any of claims 9 to 11 characterised in that the water soluble polymer has the general formula I wherein $R_9$ represents a hydrogen atom.

13. A method according to any of claims 9 to 12 characterised in that $R_{10}$ represents a sulphonate containing group.

14. A method according to any of claims 9 to 13 characterised in that $R_{10}$ represents a group $-(CH_2)_xSO_3M$ wherein M represents a hydrogen atom or an alkali metal or a alkaline earth metal and x is zero or is an integer having a value of from 1 to 4; a group having the formula $-CONHC(CX_z)_yCH_2SO_3M$ wherein y is an integer having a value of from 1 to 4 and X represents a hydrogen atom or a methyl group; a phenyl sulphonic acid group $C_6H_4SO_3M$ or a group having the formula $CH_2O[CY_2]_zSO_3M$ wherein Y represents a hydrogen atom, a hydroxyl group or a methyl group, z is an interger having a value of from 1 to 4 and M represents a hydrogen atom or an alkali metal or an alkaline earth metal.

15. A method according to claim 13 characterised in that $R_{10}$ represents a group having the formula $-CONHC(CH_3)_2CH_2SO_3M$ wherein M represents a hydrogen atom, an alkali metal or an alkaline earth metal.

16. A method according to any of the preceding claims characterised in that a mixture of at least one homopolymeric compound having the formula I with at least one copolymeric compound having the formula I is added to the aqueous system.

17. A method according to claim 16 characterised in that the homopolymeric scale inhibitor is a phosphino poly(meth)-acrylic acid.

18. A method according to either of claims 16 or 17 characterised in that the homopolymeric scale inhibitor has the general formula VI.

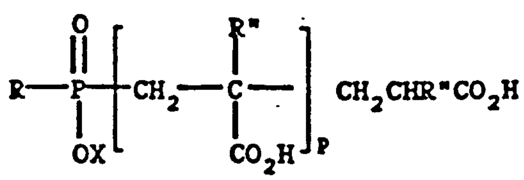

VI

wherein X represents a hydrogen atom or an alkali metal cation, R" represents a hydrogen atom or a methyl group. R represents a hydrogen atom or a group

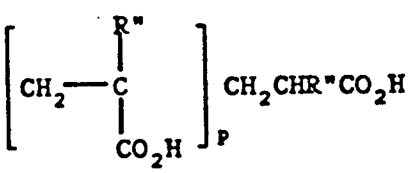

and p is an integer.

19. A method according to any of claims 16 to 18 characterised in that the copolymeric compound has the formula I and $R_{10}$ represents a group $-(CH_2)_xSO_3M$ wherein M represents a hydrogen atom or an alkali metal or a alkaline earth metal and x is zero or is an integer having a value of from 1 to 4; a group having the formula $-CONHC(CX_z)_yCH_2SO_3M$ wherein y is an integer having a value of from 1 to 4 and X represents a hydrogen atom or a methyl group; a phenyl sulphonic acid group $C_6H_4SO_3M$ or a group having the formula $CH_2O[CY_2]_zSO_3M$ wherein Y represents a hydrogen atom, a hydroxyl group or a methyl group, z is an interger having a value of from 1 to 4 and M represents a hydrogen atom or an

alkali metal or an alkaline earth metal.

**20.** A method according to claim 19 characterised in that $R_{10}$ represents a group having the formula $-CONHC(CH_3)_2CH_2SO_3M$ wherein M represents a hydrogen atom, an alkali metal or an alkaline earth metal.

**21.** A mixture containing a hompolymeric phosphino (meth) acrylic acid having the formula VI and a copolymeric phosphinopolycarboxylic acid having the formula I wherein $R_{10}$ represents a group $-(CH_2)_xSO_3M$ wherein M represents a hydrogen atom or an alkali metal or a alkaline earth metal and x is zero or is an integer having a value of from 1 to 4; a group having the formula $-CONHC(CX_z)_yCH_2-SO_3M$ wherein y is an integer having a value of from 1 to 4 and X represents a hydrogen atom or a methyl group; a phenyl sulphonic acid group $C_6H_4SO_3M$ or a group having the formula $CH_2O[CY_2]_zSO_3M$ wherein Y represents a hydrogen atom, a hydroxyl group or a methyl group, z is an interger having a value of from 1 to 4 and M represents a hydrogen atom or an alkali metal or an alkaline earth metal.

**22.** A mixture according to claim 21 characterised in that the copolymeric compound has the formula I wherein $R_{10}$ represents a group having the formula $-CONHC(CH_3)_2CH_2SO_3M$ wherein M represents a hydrogen atom, an alkali metal or an alkaline earth metal.

**23.** A method according to any of claims 1 to 20 characterised in that the aqueous system is a liquid stream which has been generated in a geothermal well.

**24.** A method according to claim 23 characterised in that the water soluble polymer is added to the liquid stream after that stream has been separated from the vapour stream generated in the well.

**25.** A method according to either of claims 23 or 24 characterised in that the amount of polymer added is sufficient to provide a concentration of from 1 to 100 ppm of polymer in the liquid stream.

Figure 1

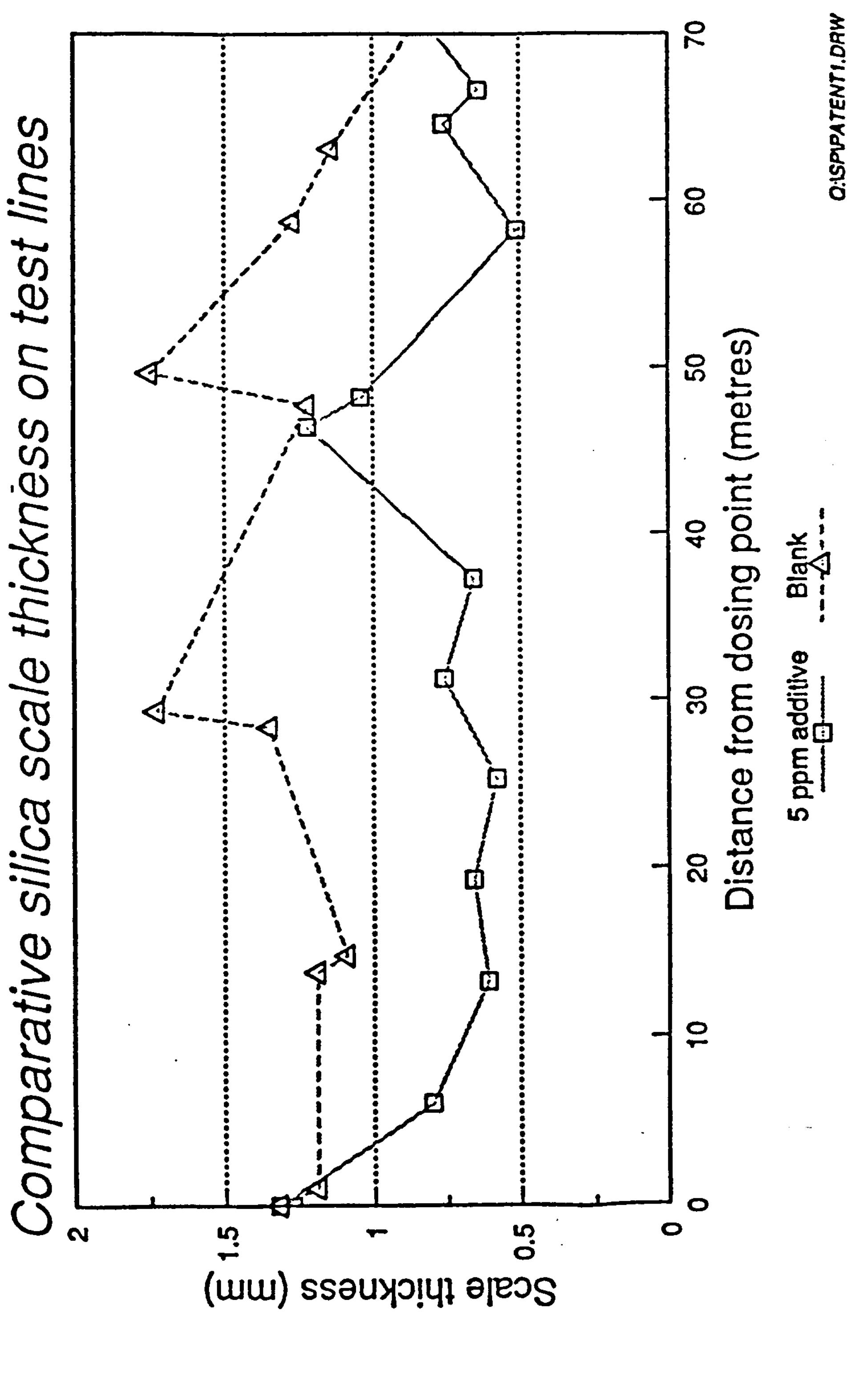
Comparative silica scale thickness on test lines
Scale thickness (mm)
2
1.5
1
0.5
0
0
10
20
30
40
50
60
70
Distance from dosing point (metres)
5 ppm additive
Blank
O:\SPI\PATENT1.DRW

Figure 2

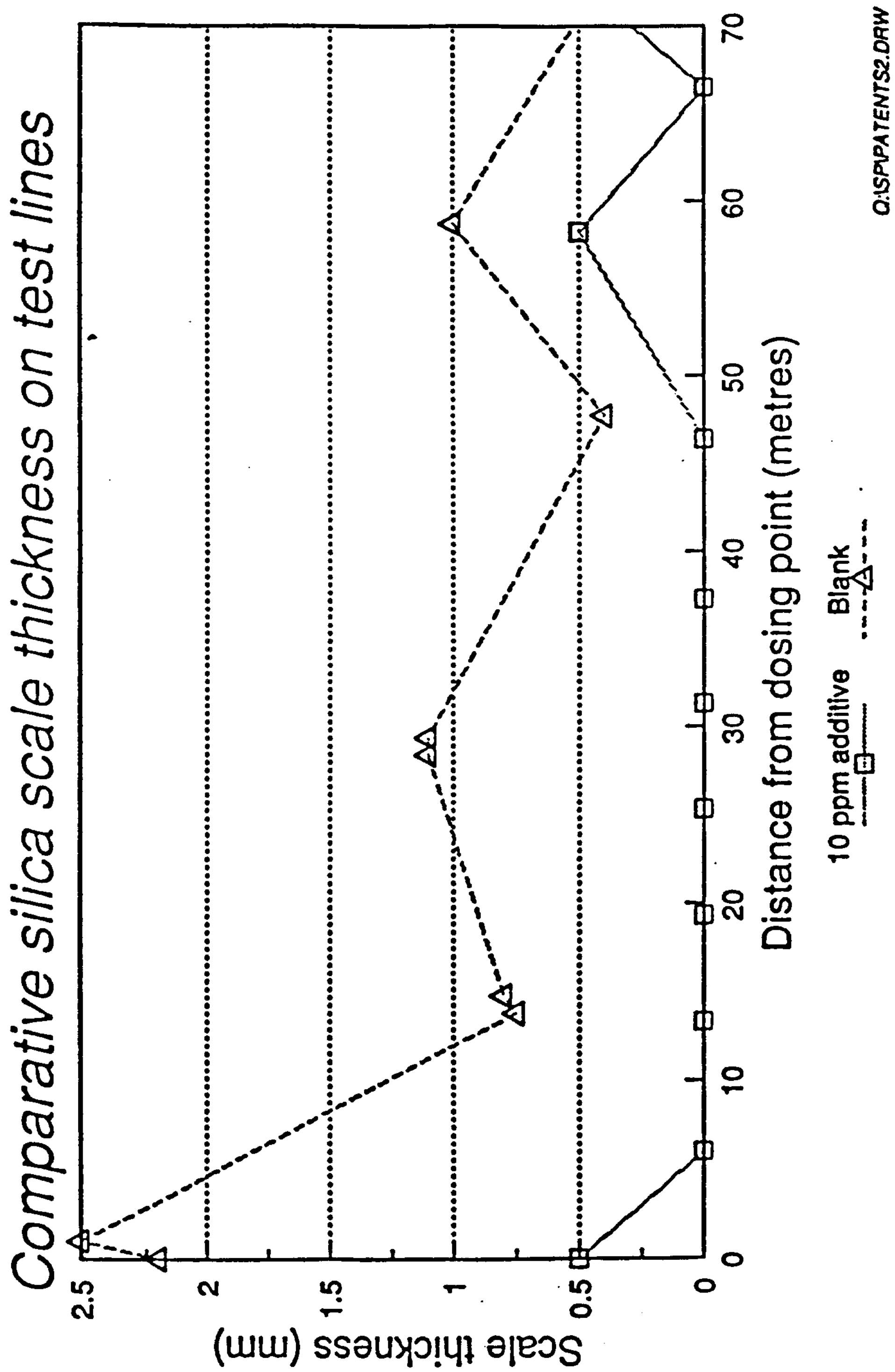
Comparative silica scale thickness on test lines
Scale thickness (mm)
2.5
2
1.5
1
0.5
0
0
10
20
30
40
50
60
70
Distance from dosing point (metres)
10 ppm additive
Blank
Q:\SPPATENTS2.DRW